# EUROPÄISCHE PATENTSCHRIFT

(11) **EP 3 191 222 B1**
(45) Veröffentlichungstag und Bekanntmachung des Hinweises auf die Patenterteilung: **18.12.2019**
(21) Anmeldenummer: 15771518.6
(22) Anmeldetag: 09.09.2015
(51) Int. Cl.: B01J 23/38, B01J 23/656, B01J 23/42, B01J 23/44, B01J 23/46, B01J 23/755, B01J 23/889, B01J 37/02, B01J 35/04, B01D 53/52, B01D 53/66, B01D 53/94, B01J 29/08, B01J 29/40, B01J 29/70, F01N 3/28, F01N 3/10

(54) **BESCHICHTUNGSSUSPENSION**
COATING SLURRY
DISPERSION DE COUCHAGE

(30) Priorität: 10.09.2014 DE 102014113016
(43) Veröffentlichungstag der Anmeldung: 19.07.2017
(73) Patentinhaber: Umicore AG & Co. KG, 63457 Hanau-Wolfgang (DE)
(72) Erfinder: DORNHAUS, Franz, 63110 Rodgau (DE); SCHIFFER, Michael, 63450 Hanau (DE)
(86) Internationale Anmeldenummer: PCT/EP2015/070574
(87) Internationale Veröffentlichungsnummer: WO 2016/038074

(56) Entgegenhaltungen:
- WO-A1-2014/080220
- WO-A1-2015/110819
- JP-A- 2001 104 781
- JP-A- 2004 230 223
- US-A- 5 296 435
- US-A1- 2010 152 032

## Beschreibung

Die vorliegende Erfindung betrifft eine Suspension zur Beschichtung von Katalysator-Substraten (Washcoat), sowie ein Verfahren zur Beschichtung eines Katalysatorträgersubstrates.

Abgase von Kraftfahrzeugen mit einem überwiegend mager betriebenen Verbrennungsmotor enthalten neben Partikelemissionen insbesondere die Primäremissionen Kohlenmonoxid CO, Kohlenwasserstoffe HC und Stickoxide NOx. Aufgrund des relativ hohen Sauerstoffgehaltes von bis zu 15 Vol.-% können Kohlenmonoxid und Kohlenwasserstoffe durch Oxidation leicht unschädlich gemacht werden, die Reduktion der Stickoxide zu Stickstoff gestaltet sich jedoch wesentlich schwieriger.

Es ist bekannt, Stickoxide aus Abgasen in Gegenwart von Sauerstoff mittels Stickoxidspeicherkatalysatoren, für die auch die Begriffe "Lean NOx Trap" oder LNT üblich sind, unschädlich zu machen. Deren Reinigungswirkung beruht darauf, dass in einer mageren Betriebsphase des Motors die Stickoxide vom Speichermaterial des Speicherkatalysators vorwiegend in Form von Nitraten gespeichert werden und diese in einer darauf folgenden fetten Betriebsphase des Motors wieder zersetzt und die so freiwerdenden Stickoxide mit den reduzierenden Abgasanteilen am Speicherkatalysator zu Stickstoff, Kohlendioxid und Wasser umgesetzt werden. Diese Arbeitsweise ist beispielsweise in der SAE-Schrift SAE 950809 beschrieben.
Als Speichermaterialien kommen insbesondere Oxide, Carbonate oder Hydroxide von Magnesium, Calcium, Strontium, Barium, der Alkalimetalle, der Seltenerdmetalle oder Mischungen davon in Frage. Diese Verbindungen sind aufgrund ihrer basischen Eigenschaften in der Lage, mit den sauren Stickoxiden des Abgases Nitrate zu bilden und sie auf diese Weise abzuspeichern. Sie sind zur Erzeugung einer großen Wechselwirkungsfläche mit dem Abgas in möglichst hoher Dispersion auf geeigneten Trägermaterialien abgeschieden. Stickoxid-Speicherkatalysatoren enthalten darüber hinaus in der Regel Edelmetalle wie Platin, Palladium und/oder Rhodium als katalytisch aktive Komponenten. Deren Aufgabe ist es einerseits, unter mageren Bedingungen NO zu NO₂, sowie CO und HC zu CO₂ zu oxidieren und andererseits während der fetten Betriebsphasen, in denen der Stickoxid-Speicherkatalysator regeneriert wird, freigesetztes NO₂ zu Stickstoff zu reduzieren.

Speichermaterialien für Stickoxide reagieren aber auch mit anderen sauren Oxiden im Abgas. Problematisch ist dabei insbesondere, dass aus Schwefelkomponenten im Kraftstoff entstandenes Schwefeldioxid am Edelmetallkatalysator zu Schwefeltrioxid oxidiert und vom Speichermaterial als Sulfat gebunden wird. Da Schwefeltrioxid deutlich saurere Eigenschaften als Stickoxide besitzt, ist beispielsweise bei Verwendung von Barium als Speichermaterial die Bildung von Bariumsulfat der Bildung von Bariumnitrat bevorzugt.

Moderne Dieselkraftstoffe weisen zwar einen geringen Schwefelgehalt auf, dennoch muss der Stickoxidspeicherkatalysator von Zeit zu Zeit entschwefelt werden. Dabei entstehen normalerweise erhebliche Mengen an Schwefelwasserstoff, der schon wegen seines üblen Geruches nicht in die Umwelt gelangen soll.
Abhilfe schaffen sogenannte Schwefelwasserstoff-Sperrkatalysatoren, die abströmseitig zum Stickoxidspeicherkatalysator auf einem zusätzlichen Substrat im Unterboden untergebracht sein können. Bevorzugt ist es aber selbstverständlich, den Schwefelwasserstoff-Sperrkatalysator auf einem sowieso schon vorhandenen Substrat unterzubringen, beispielsweise auf einem Dieselpartikelfilter.

Durch die Integration der Sperrfunktion auf dem Dieselpartikelfilter kann eine erhebliche Kosten- und Bauraum-Einsparung erzielt werden. Voraussetzung für eine praktikable Integration ist aber, dass der Staudruck des Filters im für herkömmliche Filter-Beschichtungen üblichen Rahmen bleibt und dass die bei der aktiven Filterregeneration entstehenden Sekundäremissionen ein akzeptables Niveau nicht übersteigen. Des Weiteren muss natürlich die Sperr-Funktion dauerhaft stabil gegenüber periodischen aktiven Filterregenerationen sein. Das Bauteil sollte vorteilhafterweise auch eine signifikante HC/CO-Umsatzperformance aufweisen.

Ein solches Partikelfilter mit Schwefelwasserstoff-Sperrfunktion ist bereits in der EP 2 275 194 A1 beschrieben. Es umfasst eine oxidationsaktive, katalytische Beschichtung, die mindestens ein katalytisch aktives Platingruppenmetall enthält, sowie eine Kupferverbindung, insbesondere Kupferoxid, die die Schwefelwasserstoff-Sperrfunktion übernimmt. Da Kupfer als Katalysatorgift für das Platingruppenmetall wirkt, sind beide in getrennten Beschichtungen auf den Filterkörper aufgebracht.

Die US 6,887,445 beschreibt die Reinigung von Gasen und Flüssigkeiten, die mit schwefelhaltigen Verbindungen verschmutzt sind mittels eines Oxid-Produktes, das ein Eisenoxid- oder Zinkoxid-Produkt ist. Letzteres ist mit einem Aktivator aktiviert, der neben einer Vielzahl von Verbindungen auch beispielsweise Platinoxid, Palladiumoxid oder eine Manganverbindung, inklusive Mangancarbonat, sein kann.

Aus der US 5,196,390 ist ein Dreiwegekatalysator bekannt, der in Form einer Beschichtung auf einem Substrat vorliegt, wobei sich zwischen dieser Beschichtung und dem Substrat eine weitere Schicht zur Unterdrückung von Schwefelwasserstoff-Emissionen befindet. Letztere enthält ein Metalloxid, das aus der Gruppe Manganoxid, Nickeloxid und Eisenoxid ausgewählt ist.

Auch aus der WO2014/080220 ist die Verwendung von Manganoxid (MnO₂) zur Kontrolle der Schwefelwasserstoff-Emissionen bekannt. Dabei werden Manganoxid und Edelmetall in einer Beschichtung auf das Filtersubstrat aufgebracht, wobei auch der zur Beschichtung verwendete Washcoat Manganoxid enthält.

Manganoxid hat allerdings Eigenschaften, die die Verarbeitung unangenehm bzw. aufwendig machen. Beim Prozessieren, insbesondere beim Mahlen des Washcoates bildet sich ein "schmieriger" Film aus braun-schwarzem Manganoxid auf allen Oberflächen, die mit dem Washcoat in Berührung kommen. Dies führt zu erheblichem Reinigungsaufwand beim Produktwechsel. Des weiteren kann auch Mangan, zwar deutlich schwächer ausgeprägt als Kupfer, aber immer noch signifikant, zu einer Beeinträchtigung der katalytischen Performance der Edelmetallkomponenten des Washcoates, speziell nach Alterung, führen.

Aufgabe der vorliegenden Erfindung war es deshalb, eine Beschichtungssuspension (Washcoat) bereitzustellen, mit dem Katalysatorträgersubstrate in möglichst einfacher Art und Weise mit einer Oxidations- und einer Schwefelwasserstoff-Sperrfunktion beschichtet werden können und wobei insbesondere die oben beschriebenen Probleme nicht auftauchen.

Es wurde nun überraschend gefunden, dass diese Aufgabe gelöst wird, wenn man für die Schwefelwasserstoff-Sperrfunktion zwar Manganoxid (MnO₂) verwendet, zur Beschichtung des Katalysatorträgersubstrates aber eine Beschichtungssuspension (Washcoat) einsetzt, die Mangan(II)carbonat enthält. Dieses wird bei der sich an die Beschichtung anschließenden Trocknung und Kalzinierung in Manganoxid umgewandelt.

Die vorliegende Erfindung betrifft somit eine Beschichtungssuspension, enthaltend mindestens ein Platingruppenmetall auf einem Trägermaterial und Mangan(II)carbonat.

Zu den Platingruppenmetallen gehören die "schweren Platinmetalle" Osmium, Iridium und Platin, sowie die "leichten Platinmetalle" Ruthenium, Rhodium und Palladium. Von den Platingruppenmetallen ist die Platingruppe zu unterscheiden, die lediglich Nickel, Palladium und Platin umfasst. Platingruppenmetalle, die in der erfindungsgemäßen Beschichtungssuspension verwendet werden, sind insbesondere Platin, Palladium und Rhodium.

Ausführungsformen der erfindungsgemäßen Beschichtungssuspension enthalten Platin und Palladium oder nur Platin.
Sofern sie Platin und Palladium enthalten, so ist liegt das Verhältnis Platin zu Palladium insbesondere bei 15:1 bis 1:5, bevorzugt bei 12:1 bis 1:2 und besonders bevorzugt bei 6:1 bis 1:1, beispielsweise bei 5:1, 4:1, 3:1 oder 2:1.
Die Gesamtmenge an Platingruppenmetall liegt insbesondere bei 1 bis 35 g/ft3 (entspricht ca. 0,035 bis 1,24 g/l), bezogen auf das Volumen des Katalysatorsubstrates.

Als Trägermaterialien für die Platingruppenmetalle kommen insbesondere die üblicherweise verwendeten hochoberflächigen, hochschmelzenden Oxide in Betracht. Dies sind bevorzugt Aluminiumoxid, Selten-Erd-dotiertes Aluminiumoxid, Siliziumdioxid, Titandioxid, Ceroxid, aber auch Mischoxide wie beispielsweise Aluminium-Silizium-Mischoxide, Cer-Zirkon-Mischoxide und Selten-Erd-dotierte Cer-Zirkon-Mischoxide.
In Ausführungsformen der vorliegenden Erfindung wird als Trägermaterial für die Platingruppenmetalle Aluminiumoxid verwendet, insbesondere solches, das durch 1 bis 6 Gew.-%, insbesondere 3 bis 4 Gew.-%, Lanthanoxid (La₂O₃) stabilisiert ist.

Mangan(II)carbonat wird bevorzugt in Mengen von 3 bis 20 g/l, besonders bevorzugt 8 bis 15 g/l, bezogen auf das Volumen des Katalysatorträgersubstrates, eingesetzt.

Bezogen auf die Washcoattrockenmasse wird Mangan(II)-carbonat in Mengen von 10 bis 85 Gew.-%, insbesondere 60 bis 70 Gew.-%., eingesetzt.

In Ausführungsformen der vorliegenden Erfindung enthält die erfindungsgemäße Beschichtungssuspension keine Eisenverbindungen, insbesondere kein Eisenoxid und kein Eisenhydroxid.

In Ausführungsformen der vorliegenden Erfindung kann die erfindungsgemäße Beschichtungssuspension ein oder mehrere Zeolithverbindungen enthalten. Diese sind insbesondere ausgewählt aus der Gruppe bestehend aus Zeolith β (Zeolith beta), Zeolith Y, ZSM-5 und Mischungen aus zwei oder mehreren davon.
Sofern Zeolithverbindungen verwendet werden, liegen sie in Mengen von 3 bis 20 g/l, bezogen auf das Volumen des Katalysatorträgersubstrates, vor.

Die Herstellung der erfindungsgemäßen Beschichtungssuspension kann in einfacher Weise dadurch erfolgen, dass ein mit mindestens einem Platingruppenmetall belegtes Trägermaterial und Mangan(II)carbonat in den gewünschten Mengen durch Rühren in einem wässrigen Medium gemischt werden. Gegebenenfalls kann um das gewünschte Gewichtsverhältnis von Trägermaterial und Mangan(II)carbonat einzustellen, neben dem mit Platingruppenmetall belegten Trägermaterial zusätzlich auch noch unbelegtes Trägermaterial eingesetzt werden. Außerdem können ein oder mehrere Zeolithverbindungen in der gewünschten Menge beigemischt werden.
Alternativ kann auch das Trägermaterial in wässrigem Medium vorgelegt und das mindestens eine Platingruppenmetall in einem ersten Schritt nach dem Injektionsverfahren appliziert werden. In einem zweiten Schritt werden dann Mangan(II)carbonat und gegebenenfalls weitere Bestandteile wie oben beschrieben zugefügt.
Vorzugsweise wird das Verfahren so geführt, dass der pH-Wert der Suspension immer im Bereich >5 ist und insbesondere bei 6 bis 8 liegt.

Es ist üblich, die Beschichtungssuspension einem Mahlprozess zu unterwerfen, um eine für die Beschichtung eines Katalysatorträgersubstrates geeignete Korngröße einzustellen. Sofern ein Wandflussfiltersubstrat beschichtet werden soll, wird normalerweise auf einen d₉₉-Wert von < 7 µm gemahlen.

Die erfindungsgemäße Beschichtungssuspension ermöglicht es, Katalysatorträgersubstrate in einem einzigen Beschichtungsschritt sowohl mit einer Schwefelwasserstoff-Sperrfunktion, als auch mit einer Oxidationsfunktion zu beschichten.

Die vorliegende Erfindung betrifft deshalb auch ein Verfahren zur Beschichtung eines Katalysatorträgersubstrates, dadurch gekennzeichnet, dass das Katalysatorträgersubstrat mit einer erfindungsgemäßen Beschichtungssuspension in Kontakt gebracht und anschließend getrocknet und kalziniert wird.

Bevorzugt erfolgt das in Kontakt bringen des Katalysatorträgersubstrats mit einer erfindungsgemäßen Beschichtungssuspension nach einem der üblichen Tauchbeschichtungsverfahren bzw. Pump- und Saug-Beschichtungsverfahren. Diese Verfahren sind aus dem Stand der Technik hinreichend bekannt.
Die erfindungsgemäße Beschichtungssuspension erlaubt es insbesondere, die genannten Funktionalitäten in einem einzigen Beschichtungsschritt auf das Katalysatorsubstrat aufzubringen.

Als Katalysatorträgersubstrate eignen sich grundsätzlich alle bekannten katalytisch inerten Tragkörper für Heterogenkatalysatoren. Bevorzugt sind monolithische Durchflusswabenkörper aus Keramik und Metall, sowie insbesondere Partikelfiltersubstrate, wie sie üblicherweise zur Reinigung von Dieselmotorenabgasen eingesetzt werden. Ganz besonders bevorzugt sind keramische Durchflusswabenkörper und keramische Wandflussfiltersubstrate aus Cordierit, Aluminiumtitanat oder Siliziumcarbid.

Das erfindungsgemäße Beschichtungsverfahren ist einfach und zeichnet sich im Vergleich zur Verwendung von MnO₂ enthaltenden Washcoats durch eine erhebliche Verbesserung des Abreinigungsverhaltens aus. Im Übrigen resultiert die Verwendung der erfindungsgemäßen Beschichtungssuspension im Vergleich zu MnO₂ enthaltenden Washcoats zu einer unerwarteten Verbesserung der Schwefelwasserstoff-Performance nach Alterung.

Die Erfindung wird im Folgenden anhand von Figuren und Beispielen weitergehend erläutert:
Figur 1 zeigt das Ergebnis eines Tests, bei dem das mit einer erfindungsgemäßen Beschichtungssuspension beschichtete Filter K3 auf seine Wirkung als Schwefelwasserstoff-Sperrkatalysator untersucht wurde.
Figur 2 zeigt das Ergebnis eines Tests, bei dem das mit einer herkömmlichen Beschichtungssuspension beschichtete Filter VK1 auf seine Wirkung als Schwefelwasserstoff-Sperrkatalysator untersucht wurde.

### Beispiel 1

a) Zur Herstellung einer erfindungsgemäßen Beschichtungssuspension wurden 15 g/l (bezogen auf das Volumen des zu beschichtenden Wandflussfiltersubstrates, siehe Schritt b)) eines mit 4% La₂O₃ stabilisierten γ-Aluminiumoxides unter ständigem Rühren in Wasser suspendiert und nach der Injektionsmethode mit 0,177 g/l (5 g/ft³) (bezogen auf das Volumen des zu beschichtenden Wandflussfiltersubstrates, siehe Schritt b)) mit Platin und Palladium im Verhältnis 2:1 belegt. Anschließend wurden 9,5 g/l (bezogen auf das Volumen des zu beschichtenden Wandflussfiltersubstrates, siehe Schritt b)) pulverförmiges Mangan(II)carbonat hinzugefügt und die Mischung in einer Kugelmühle vermahlen, bis ein D₉₉-Wert von < 5 µm erreicht war.
b) Mit der unter a) erhaltenen Beschichtungssuspension wurde ein handelsübliches Wandflussfiltersubstrat aus Siliziumcarbid beschichtet. Dazu wurde das Filtersubstrat so ausgerichtet, dass die Strömungskanäle senkrecht waren. Die Suspension wurde dann durch die untere Stirnfläche in das Substrat eingepumpt. Nach kurzer Zeit wurde überschüssige Suspension nach unten abgesaugt. Durch diese Methode wurde die Beschichtung im Wesentlichen in die Poren der Substratwände eingebracht. Der Beschichtungsschritt wurde nicht wiederholt.
   Anschließend wurde das Filter getrocknet und bei 550°C kalziniert. Das fertig beschichtete und kalzinierte Wandflussfiltersubstrat enthält kein Mangan(II)carbonat mehr, sondern nur noch Manganoxid.

### Beispiel 2

Zur Herstellung einer erfindungsgemäßen Beschichtungssuspension wurden 8 g/l (bezogen auf das Volumen des zu beschichtenden Wandflussfiltersubstrates, siehe Schritt b)) eines mit 4% La₂O₃ stabilisierten γ-Aluminiumoxides, das mit 0,706 g/l (20 g/ft³) (bezogen auf das Volumen des zu beschichtenden Wandflussfiltersubstrates, siehe Schritt b)) Platin und Palladium im Verhältnis 2:1 belegt war, 4 g/l (bezogen auf das Volumen des zu beschichtenden Wandflussfiltersubstrates, siehe Schritt b)) des identischen, aber nicht mit Edelmetall belegten 4% La₂O₃ stabilisierten γ-Aluminiumoxides unter ständigem Rühren in Wasser suspendiert. Sodann wurden 10 g/l (bezogen auf das Volumen des zu beschichtenden Wandflussfiltersubstrates, siehe Schritt b)) pulverförmiges Mangan(II)carbonat hinzugefügt und die Mischung in einer Kugelmühle vermahlen, bis ein D₉₉-Wert von < 5 µm erreicht war.
Mit der so erhaltenen Beschichtungssuspension wurde ein handelsübliches Wandflussfiltersubstrat aus Siliziumcarbid wie in Beispiel 1, Schritt b) angegeben beschichtet.

### Beispiel 3

Zur Herstellung einer erfindungsgemäßen Beschichtungssuspension wurden 5 g/l (bezogen auf das Volumen des zu beschichtenden Wandflussfiltersubstrates, siehe Schritt b)) eines mit 4% La₂O₃ stabilisierten γ-Aluminiumoxides, das mit 0,530 g/l (15 g/ft³) (bezogen auf das Volumen des zu beschichtenden Wandflussfiltersubstrates, siehe Schritt b)) Platin und Palladium im Verhältnis 6:1 belegt war, 6 g/l (bezogen auf das Volumen des zu beschichtenden Wandflussfiltersubstrates, siehe Schritt b)) des identischen, aber nicht mit Edelmetall belegten mit 4% La₂O₃ stabilisierten γ-Aluminiumoxides unter ständigem Rühren in Wasser suspendiert. Sodann wurden 16 g/l (bezogen auf das Volumen des zu beschichtenden Wandflussfiltersubstrates, siehe Schritt b)) pulverförmiges Mangan(II)carbonat hinzugefügt und die Mischung in einer Kugelmühle vermahlen, bis ein D₉₉-Wert von < 7 µm erreicht war.
Mit der so erhaltenen Beschichtungssuspension wurde ein handelsübliches Wandflussfiltersubstrat aus Siliziumcarbid wie in Beispiel 1, Schritt b) angegeben beschichtet. Die Zielbeladung war 25,06 g/l. Sowohl bei der Herstellung der Beschichtungssuspension, als auch bei der Beschichtung wurde ein pH-Wert von >/= 6 eingehalten.
Das so erhaltene Filter wird nachstehend als K3 bezeichnet.

### Vergleichsbeispiel 1

Beispiel 3 wurde wiederholt mit dem Unterschied, dass an Stelle von 16 g/l pulverförmiges Mangan(II)carbonat, 12 g/l pulverförmiges Mangan(IV)oxid eingesetzt wurden.
Das so erhaltene Filter wird nachstehend als VK1 bezeichnet.

Nach dem Mahlprozess waren die Washcoat-Schläuche der Kugelmühle mit einer braunen Schicht verschmutzt und mussten entsorgt werden. Im Falle von Beispiel 3 waren dagegen die Washcoat-Schläuche in noch sehr gutem Zustand und konnten weiter verwendet werden

Sowohl das im Vergleichsbeispiel hergestellte Filter VK1, als auch das erfindungsgemäße Filter K3 aus Beispiel 3 wurden auf ihre katalytische Aktivität hin untersucht.
Vor der Untersuchung wurden die Filter einer synthetischen Alterung unter hydrothermalen Bedingungen unterzogen. Dazu wurden sie in einem Ofen für 16 Stunden in einer Atmosphäre enthaltend 10 Vol.-% Wasserdampf und 10 Vol.-% Sauerstoff in Stickstoff einer Temperatur von 800°C ausgesetzt.
Die Fähigkeit, unter den Bedingungen, die bei der Entschwefelung eines vorgeschalteten Stickoxid-Speicherkatalysators auftreten können, H₂S katalytisch zu SO₂ zu oxidieren, wurde in einem Modellgasversuch getestet. Dazu wurde jeweils ein System aus einem handelsüblicher Stickoxid-Speicherkatalysator und einem direkt dahinter angeordneten Partikelfilter Verschwefelt. In beiden Systemen waren die Volumina von Stickoxid-Speicherkatalysator und Partikelfilter identisch. Die gewählte Schwefelmenge betrug ca. 2,4 g/L Katalysatorvolumen und wurde eingebracht mittels Zusatz von 300 Vol.-ppm SO₂ zum Abgasstrom. Anschließend wurde jeweils eine Desulfatisierung bei einer Katalysatoreingangstemperatur von 600°C simuliert. Dazu wurde die Luftzahl λ in 40 Intervallen von jeweils 8 Sekunden durch Erhöhen der CO und HC-Konzentration (CO: 1,85 Vol. %; HC: 5700 Vol.-ppm) bzw. durch Verringern der Sauerstoffkonzentration des Abgasstromes auf einen Wert von etwa 0,93 erniedrigt (Abstand dieser Fettphasen: 30 s).

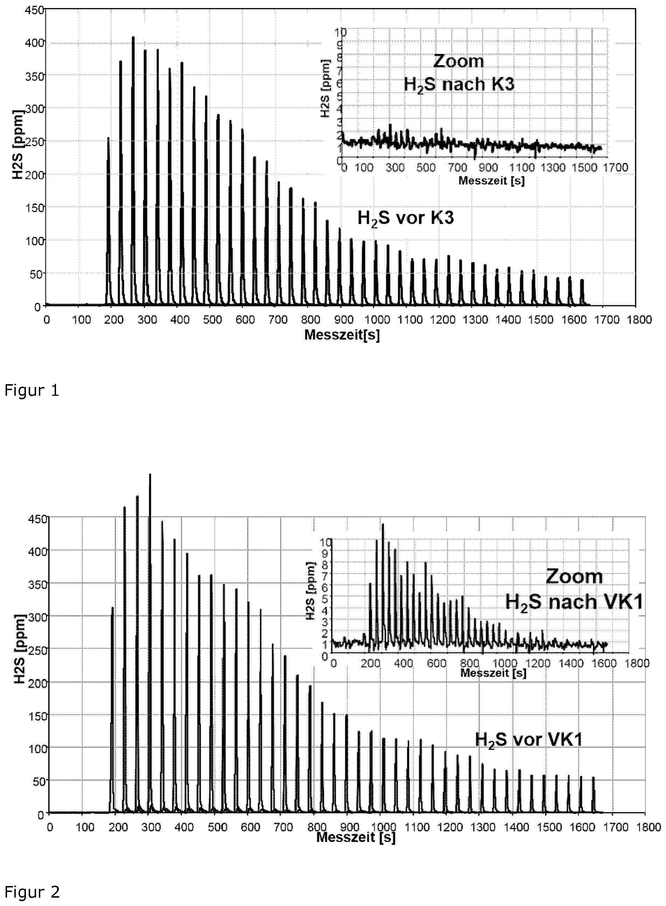

Die Ergebnisse zeigen Figur 1 für das mit einer erfindungsgemäßen Beschichtungssuspension beschichtete Filter K3 und Figur 2 für das Vergleichsfilter VK1. Es ist deutlich, dass die nach den Filtern gemessene H₂S-Konzentration im Falle von K1 wesentlich geringer ist.

## Patentansprüche

1. Beschichtungssuspension, enthaltend mindestens ein Platingruppenmetall auf einem Trägermaterial und Mangan(II)carbonat.

2. Beschichtungssuspension nach Anspruch 1, **dadurch gekennzeichnet, dass** sie als Platingruppenmetalle Platin, Palladium und/oder Rhodium enthält.

3. Beschichtungssuspension nach Anspruch 1 und/oder 2, **dadurch gekennzeichnet, dass** sie als Platingruppenmetalle Platin und Palladium oder nur Platin enthält.

4. Beschichtungssuspension nach einem oder mehreren der Ansprüche 1 bis 3, **dadurch gekennzeichnet, dass** sie als Platingruppenmetalle Platin und Palladium im Verhältnis 15:1 bis 1:5 enthält.

5. Beschichtungssuspension nach einem oder mehreren der Ansprüche 1 bis 4, **dadurch gekennzeichnet, dass** sie als Trägermaterial Aluminiumoxid, Selten-Erd-dotiertes Aluminiumoxid, Siliziumdioxid, Titandioxid, Ceroxid, Aluminium-Silizium-Mischoxide, Cer-Zirkon-Mischoxide oder Selten-Erd-dotierte Cer-Zirkon-Mischoxide enthält.

6. Beschichtungssuspension nach einem oder mehreren der Ansprüche 1 bis 5, **dadurch gekennzeichnet, dass** sie als Trägermaterial Aluminiumoxid, das mit 1 bis 6 Gew.-% La₂O₃ stabilisiert ist, enthält.

7. Beschichtungssuspension nach einem oder mehreren der Ansprüche 1 bis 6, **dadurch gekennzeichnet, dass** sie ein oder mehrere Zeolithverbindungen enthält.

8. Beschichtungssuspension nach Anspruch 7, **dadurch gekennzeichnet, dass** die Zeolithverbindung ausgewählt ist aus der Gruppe bestehend aus Zeolith β (Zeolith beta), Zeolith Y, ZSM-5 und Mischungen aus zwei oder mehreren davon.

9. Verfahren zur Beschichtung eines Katalysatorträgersubstrates, **dadurch gekennzeichnet, dass** das Katalysatorträgersubstrat mit einer Beschichtungssuspension gemäß einem oder mehreren der Ansprüche 1 bis 8 in Kontakt gebracht und anschließend getrocknet und kalziniert wird.

10. Verfahren nach Anspruch 9, **dadurch gekennzeichnet, dass** als Katalysatorträgersubstrat monolithische Durchflusswabenkörper aus Keramik oder Metall eingesetzt werden.

11. Verfahren nach Anspruch 9 und/oder 10, **dadurch gekennzeichnet, dass** als Katalysatorträgersubstrat keramische Durchflusswabenkörper oder keramische Wandflussfiltersubstrate aus Cordierit, Aluminiumtitanat oder Siliziumcarbid verwendet werden.

## Claims

1. Coating suspension containing at least one platinum group metal on a support material and manganese(II) carbonate.

2. Coating suspension according to claim 1, **characterized in that** it contains platinum, palladium, and/or rhodium as platinum group metals.

3. Coating suspension according to claims 1 and/or 2, **characterized in that** it contains platinum and palladium, or platinum alone, as platinum group metals.

4. Coating suspension according to one or more of claims 1 through 3, **characterized in that** it contains platinum and palladium in a ratio of 15:1 to 1:5 as platinum group metals.

5. Coating suspension according to one or more of claims 1 through 4, **characterized in that** it contains aluminum oxide, rare earth-doped aluminum oxide, silicon dioxide, titanium dioxide, cerium oxide, aluminum-silicon mixed oxides, cerium-zirconium mixed oxides, or rare earth-doped cerium-zirconium mixed oxides as support material.

6. Coating suspension according to one or more of claims 1 through 5, **characterized in that** it contains aluminum oxide, stabilized with 1 to 6 wt% La₂O₃, as support material.

7. Coating suspension according to one or more of claims 1 through 6, **characterized in that** it contains one or more zeolite compounds.

8. Coating suspension according to claim 7, **characterized in that** the zeolite compound is selected from the group consisting of zeolite β (zeolite beta), zeolite Y, ZSM-5, and mixtures of two or more of these.

9. Method for coating a catalyst support substrate, **characterized in that** the catalyst support substrate is brought into contact with a coating suspension according to one or more of claims 1 through 8 and then dried and calcined.

10. Method according to claim 9, **characterized in that** monolithic through-flow honeycomb structures made of ceramic or metal are used as a catalyst support substrate.

11. Method according to claim 9 and/or 10, **characterized in that** ceramic through-flow honeycomb structures or ceramic wall-flow filter substrates made of cordierite, aluminum titanate, or silicon carbide are used as a catalyst support substrate.

## Revendications

1. Suspension de revêtement, contenant au moins un métal du groupe du platine sur un matériau support et du carbonate de magnésium (II).

2. Suspension de revêtement selon la revendication 1, **caractérisée en ce qu'**elle contient, comme métaux du groupe du platine, du platine, du palladium et/ou du rhodium.

3. Suspension de revêtement selon la revendication 1 et/ou 2, **caractérisée en ce qu'**elle contient, comme métaux du groupe du platine, du platine et du palladium ou uniquement du platine.

4. Suspension de revêtement selon l'une ou plusieurs des revendications 1 à 3, **caractérisée en ce qu'**elle contient, comme métaux du groupe du platine, du platine et du palladium dans un rapport de 15:1 à 1:5.

5. Suspension de revêtement selon l'une ou plusieurs des revendications 1 à 4, **caractérisée en ce qu'**elle contient, comme matériau support, de l'oxyde d'aluminium, de l'oxyde d'aluminium dopé par une terre rare, du dioxyde de silicium, du dioxyde de titane, de l'oxyde de cérium, des oxydes mixtes d'aluminium-silicium, des oxydes mixtes de cérium-zirconium ou des oxydes mixtes de cérium-zirconium dopés par une terre rare.

6. Suspension de revêtement selon l'une ou plusieurs des revendications 1 à 5, **caractérisée en ce qu'**elle contient, comme matériau support, de l'oxyde d'aluminium stabilisé par 1 à 6 % en poids de La₂O₃.

7. Suspension de revêtement selon l'une ou plusieurs des revendications 1 à 6, **caractérisée en ce qu'**elle contient un ou plusieurs composés zéolithiques.

8. Suspension de revêtement selon la revendication 7, **caractérisée en ce que** le composé zéolithique est choisi dans le groupe constitué par la zéolithe β (zéolithe bêta), la zéolithe Y, le ZSM-5 et les mélanges de deux ou plus de ceux-ci.

9. Procédé pour le revêtement d'un substrat support catalytique, **caractérisé en ce que** le substrat support catalytique est mis en contact avec une suspension de revêtement selon l'une ou plusieurs des revendications 1 à 8 et est ensuite séché et calciné.

10. Procédé selon la revendication 9, **caractérisé en ce qu'**on utilise, comme substrat support catalytique, des corps monolithiques en nid d'abeille à écoulement en céramique ou en métal.

11. Procédé selon la revendication 9 et/ou 10, **caractérisé en ce qu'**on utilise, comme substrat support catalytique, des corps monolithiques céramiques en nid d'abeille à écoulement ou des substrats filtres céramiques à parois poreuses en cordiérite, en titanate d'aluminium ou en carbure de silicium.
